# EUROPÄISCHE PATENTANMELDUNG

(11) **EP 4 086 992 A2**
(43) Veröffentlichungstag der Anmeldung: **09.11.2022**
(21) Anmeldenummer: 22171349.8
(22) Anmeldetag: 03.05.2022
(51) Int. Cl.: H01M 8/0637, H01M 8/12

(54) **MITTELTEMPERATUR-BRENNSTOFFZELLE MIT INTERNER REFORMIERUNG UND SCHIENENFAHRZEUG**

(30) Priorität: 04.05.2021 DE 102021204452
(71) Anmelder: Siemens Mobility GmbH, 81739 München (DE)
(72) Erfinder: Peymandar, De-Niang Maria, 41199 Mönchengladbach (DE)

(57) **Zusammenfassung**

Eine Mitteltemperatur-Brennstoffzelle umfasst einen internen Reformer zur Erzeugung von Wasserstoff und kann mit kostengünstigen Ausgangsstoffen, insbesondere Alkoholen, betrieben werden. Aufgrund der hohen volumetrischen Leistungsdichte ist sie insbesondere für den Antrieb von Schienenfahrzeugen geeignet.

## Beschreibung

Die Erfindung betrifft eine Mitteltemperatur-Brennstoffzelle sowie ein damit ausgerüstetes Schienenfahrzeug.

Als Energiequelle für Schienenfahrzeuge können Brennstoffzellen eingesetzt werden. Erforderlich ist dabei u.a. eine hohe Leistungsdichte, insbesondere, wenn die Brennstoffzelle für den Antrieb genutzt werden sollen. Für Beschleunigungsvorgänge ist eine Leistung von typischerweise 1 - 2 MW oder mehr notwendig, wobei der zur Verfügung stehende Platz für eine Antriebseinheit begrenzt ist. Aus diesem Grund werden Niedertemperaturbrennstoffzellen eingesetzt, vorzugsweise eine Niedertemperatur-Polymer-Elektrolyt-Brennstoffzelle (NT-PEM), die eine hohe volumetrische Leistungsdichte aufweist.

NT-PEM sind weit entwickelt. Sie besitzen einen relativ einfachen Aufbau, eine kompakte Bauform und eine hohe Flexibilität bei Lastwechseln. Die Betriebstemperatur einer NT-PEM liegt unter 100°C. Zur Erreichung der benötigten Spannung werden mehrere Zellen in Reihe als sogenannter Stack geschaltet. Üblicherweise wird der Stack gekühlt.

Als Brennstoff wird reiner Wasserstoff benötigt. Ferner reagiert eine NT-PEM sehr empfindlich auf Luftkontamination, so dass mehrere Filter eingesetzt werden müssen. Durch den hohen Preis des reinen Wasserstoffs und der Filter sind die Betriebskosten einer NT-PEM sehr hoch.

Aufgabe der Erfindung ist es, eine Brennstoffzelle anzugeben, die für den Einsatz in einem Schienenfahrzeug oder einem anderen Fahrzeug geeignet ist und die niedrige Betriebskosten aufweist. Eine weitere Aufgabe ist die Angabe eines Verfahrens zum Betreiben einer Brennstoffzelle mit niedrigen Betriebskosten, das für ein Schienenfahrzeug oder ein Fahrzeug geeignet ist.

Diese Aufgaben werden gelöst durch eine Anordnung mit den Merkmalen des Patentanspruchs 1 , durch ein Fahrzeug mit den Merkmalen des Patentanspruchs 7 und durch ein Verfahren gemäß Patentanspruch 9.

Vorteilhafte Ausgestaltungen der Erfindung sind in den Unteransprüchen angegeben.

Die Erfindung schlägt vor, eine Mitteltemperatur-Brennstoffzelle mit interner Reformierung zu betreiben. Dabei ist nicht reiner Wasserstoff als Ausgangssubstanz notwendig, sondern es kann ein Alkohol, insbesondere Methanol als Wasserstoffquelle verwendet werden. Der interne Reformer ist in der Brennstoffzelle bzw. in den Stack integriert.

Als Mitteltemperatur -Brennstoffzelle wird eine Brennstoffzelle mit einer Arbeitstemperatur zwischen ca. 100°C und ca. 300°C bezeichnet.

Bekannt ist beispielsweise eine Polymer-Elektrolyt-Brennstoffzelle, die bei 100°C bis 180°C arbeitet und im Folgenden als Mitteltemperatur-PEM bezeichnet wird. Bei dieser sind Restmengen von beispielsweise SH₂, NOₓ__oder SOₓ im Brennstoff im Wesentlichen unkritisch, da diese Brennstoffzelle weniger empfindlich gegenüber Kontaminationen ist. Daher kann auf Filter verzichtet werden. Als Membran wird beispielsweise mit Phosphorsäure gesättigtes Polybenzimidazol eingesetzt. Für Anode und Kathode können die gleichen Materialien wie bei Niedertemperatur-PEM verwendet werden.

Als interner Reformer wird eine Katalysator-Struktur an der Anode der Mitteltemperatur-Brennstoffzelle angeordnet. Beispielsweise kann dies eine Schicht aus Pt, Al, Rh, Ni oder Sn an der Anode bzw. an mehreren Anoden eines Stacks sein. Die Dicke liegt im Bereich von wenigen Nanometern bis mehreren Millimetern.

Mit dem internen Reformer kann ein katalytischer Brenner gekoppelt sein, der die für die chemische Umsetzung benötigte Energie in Form von Wärme liefert.

Die Mitteltemperatur-Brennstoffzelle kann als Stack ausgebildet sein, wobei an einer oder mehreren Anoden eine den internen Reformer bildende Katalysatorschicht angeordnet ist. Der entstehende Wasserstoff muss für die Reaktion in der Brennstoffzelle ausreichend sein. Es kann ein katalytischer Brenner oder mehrere parallelgeschaltete Brenner vorgesehen sein.

Als eine Ausgangssubstanz kann ein niedermolekularer Alkohol verwendet werde. Ferner werden vorzugsweise Wasserdampf und Luft zugeführt.

Gemäß einer Ausführungsform wird dem katalytische Brenner CO₂ sowie überschüssiger Wasserstoff, die bei der Reformierung entstehen, zugeführt.

Vorzugsweise sind die Mitteltemperatur-Brennstoffzelle, der katalytische Brenner und ein Befeuchter in einem gemeinsamen Gehäuse untergebracht.

Gemäß einem weiteren Aspekt der Erfindung kann ein Fahrzeug und insbesondere ein Schienenfahrzeug mit einer Mitteltemperatur-Brennstoffzelle mit interner Reformierung ausgerüstet und betrieben werden. Durch die Integration des Reformers in die Brennstoffzelle wird eine platzsparende Anordnung erzielt und damit eine hohe volumetrische Leistungsdichte.

Gemäß eines Ausführungsbeispiels wird das Fahrzeug mit einer Mitteltemperatur-Polymer-Elektrolyt-Brennstoffzelle (MT-PEM) mit interner Reformierung ausgestattet, und als Ausgangssubstanzen werden Methanol und Wasser verwendet. Anstelle von Methanol können auch andere Alkohole, einschließlich Bio-Alkohole, eingesetzt werden, wobei niedermolekulare bevorzugt sind.

Gemäß einem weiteren Aspekt der Erfindung wird eine Mitteltemperatur-Brennstoffzelle mit interner Reformierung betrieben, wobei ein Alkohol als eine Ausgangssubstanz verwendet wird und mithilfe des internen Reformers zu Wasserstoff umgesetzt wird, der als Brennstoff für die Mittel-temperatur-Brennstoffzelle verwendet wird. Dabei kann ein katalytischer Brenner die für die Reformierung benötigte Wärmeenergie erzeugen, wobei dem katalytischen Brenner vorzugsweise Kohlendioxid und Wasserstoff, die bei der internen Reformierung gebildet werden, zugeführt werden.

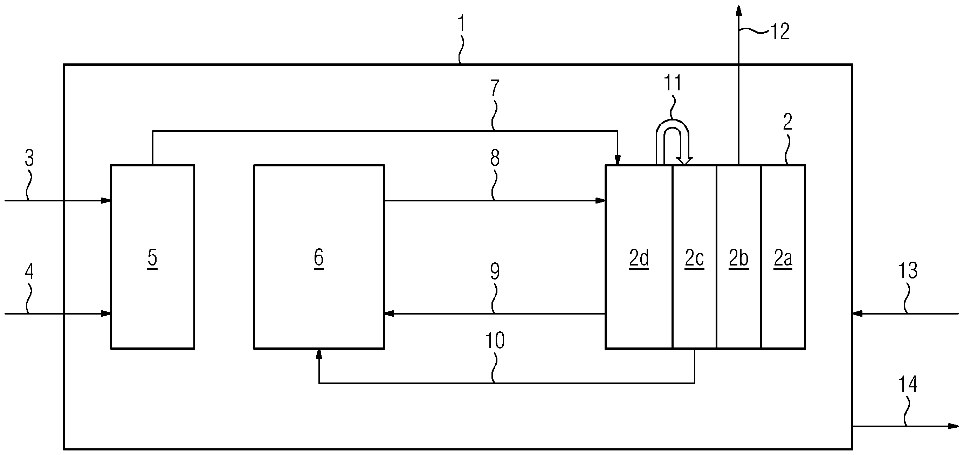

Die Erfindung wird im Folgenden anhand der Figur 1, die ein Ausführungsbeispiel schematisch darstellt, näher erläutert.

Figur 1 zeigt ein Brennstoffzellensystem 1 mit einer Brennstoffzelle 2, die als Mitteltemperatur-PEM ausgeführt ist. Sie umfasst eine Kathode 2a, eine Membran 2b, eine Anode 2c und eine schichtförmige Katalysatorstruktur 2d an der Anode 2c, die einen internen Reformer 2d darstellt. Aus Gründen der Übersichtlichkeit ist nur eine Brennstoffzelleneinheit in der Figur dargestellt, bevorzugt ist aber ein Stack, bei dem mehrere Einheiten in Reihe geschaltet sind, um die gewünschte Spannung zu erzielen. Die Katalysatorschicht 2d ist dann an mehreren, vorzugsweise an jeder Anode angeordnet. An der Katalysatorschicht findet die Reformierung der Ausgangssubstanzen Methanol und Wasserdampf, d.h. die Reaktion zu Kohlendioxid, Kohlenmonoxid und Wasserstoff, statt.

Dem Brennstoffzellensystem 1 werden über Zuleitungen 3, 4 Methanol und Wasser (beispielsweise als Wasserdampf) zugeführt. Die Ausgangssubstanzen gelangen in einen Befeuchter 5 und von dort über eine Leitung 7 zum internen Reformer 2d.

Da die Reaktion endotherm ist, wird dem internen Reformer 2d Wärme zugeführt, was in der Figur durch die Leitung 8 symbolisiert ist. Die geschieht bevorzugt mithilfe eines katalytischen Brenners 6. Diesem werden dafür Kohlendioxid und Wasserstoff zugefügt, ersteres über eine Leitung 9 vom internen Reformer 2d. Als Wasserstoff wird überschüssiger Wasserstoff aus der Brennstoffzellenreaktion über eine Leitung 10 von der Brennstoffzelle zugeführt. Es können auch mehrere Brennereinheiten vorgesehen sein, die jeweils einer Zelleneinheit des Stacks zugeordnet sind.

An der Katalysatorschicht 2d auf der Anode 2c entsteht Wasserstoff, Kohlenmonoxid und Kohlendioxid. Das Kohlendioxid wird wie erläutert zum katalytischen Brenner geleitet. Wasserstoff und Kohlenmonoxid werden der Anode 2c der Brennstoffzelle zugeführt, dies ist durch den Pfeil 11 symbolisiert. Die Mitteltemperatur-Brennstoffzelle 2 erzeugt nach bekannten Verfahren nutzbare elektrische Energie, symbolisiert durch die Leitung 12.

Von den weiteren Komponenten, die nach dem Wissen des Fachmanns zum Betrieb einer Brennstoffzelle in dem Brennstoffzellensystem notwendig oder üblicherweise vorhanden sind, sind in der Figur noch eine Zuleitung 13 für Luft und eine Ableitung 14 für Reaktionsprodukte dargestellt. Das dargestellte Brennstoffzellensystem 1 ist vorzugsweise in einem Gehäuse untergebracht.

Die vorzugsweise eingesetzte Mitteltemperatur-PEM arbeitet im Temperaturbereich zwischen 100°C und 180°C. Es werden andere Membranmaterialien als bei Niedertemperatur-PEM eingesetzt, wie beispielsweise mit Phosphorsäure gesättigtes Polybenzimidazol.

Es können aber auch andere Mitteltemperatur-Brennstoffzellen mit einem internen Reformer ausgestattet werden und betrieben werden.

Das erfindungsgemäße Brennstoffzellensystem ist besonders geeignet für den Einbau in ein Schienenfahrzeug oder ein anderes Fahrzeug, und insbesondere für dessen Antrieb, da eine hohe Leistungsdichte erzielt wird. Da nicht reiner Wasserstoff, sondern günstigere Ausgangssubstanzen eingesetzt werden, entsteht im Betrieb ein deutlicher Kostenvorteil. Weitere Kosten werden durch den Wegfall der Filter eingespart. Zudem ist die Umrüstung eines Schienenfahrzeugs mit Dieselbetrieb auf das vorgeschlagene Mitteltemperatur-Brennstoffzellensystem einfach, da Methanol oder andere Alkohole als brennbare Flüssigkeit wie Diesel behandelt werden kann, wodurch auch die Zulassung vereinfacht wird bzw. bekannte Zulassungsprozesse zum Einsatz kommen.

## Patentansprüche

1. Mitteltemperatur-Brennstoffzelle (2) für ein Schienenfahrzeug oder ein Fahrzeug, die einen internen Reformer (2d) zur Erzeugung von Wasserstoff aufweist.

2. Mitteltemperatur-Brennstoffzelle nach dem vorhergehenden Anspruch, **dadurch gekennzeichnet, dass**
der interne Reformer (2d) mit einem katalytischen Brenner (6) gekoppelt ist.

3. Mitteltemperatur-Brennstoffzelle nach einem der vorgehenden Ansprüche, **dadurch gekennzeichnet, dass** der interne Reformer (2d) eine Katalysator-Struktur, insbesondere eine Schicht enthaltend Pt, Al, Rh, Ni oder Sn, an einer Anode (2c) der Mitteltemperatur-Brennstoffzelle (2) umfasst.

4. Mitteltemperatur-Brennstoffzelle nach einem der vorgehenden Ansprüche, **dadurch gekennzeichnet, dass** sie mit einem Alkohol, insbesondere Methanol, und Wasser als Ausgangssubstanzen betreibbar ist.

5. Mitteltemperatur-Brennstoffzelle nach einem der vorgehenden Ansprüche, **dadurch gekennzeichnet, dass** sie als Stack mit mehreren Anoden (2c) ausgebildet ist, die jeweils mit einem internen Reformer (2d) gekoppelt sind.

6. Mitteltemperatur-Brennstoffzelle nach einem der vorgehenden Ansprüche, **dadurch gekennzeichnet, dass** sie eine Mitteltemperatur- Polymer-Elektrolyt - Brennstoffzelle ist.

7. Fahrzeug mit einer Mitteltemperatur-Brennstoffzelle (2) nach einem der vorhergehenden Ansprüche.

8. Fahrzeug nach dem vorhergehenden Anspruch, **dadurch gekennzeichnet, dass**
es ein Schienenfahrzeug ist.

9. Verfahren zum Betreiben einer Mitteltemperatur-Brennstoffzelle,
**dadurch gekennzeichnet, dass**
- eine Mitteltemperatur-Brennstoffzelle (2) mit einem internen Reformer (2d) verwendet wird,
- ein Alkohol als eine Ausgangssubstanz verwendet wird und mithilfe des internen Reformers (2d) zu Wasserstoff umgesetzt wird, der als Brennstoff für die Mitteltemperatur-Brennstoffzelle (2) verwendet wird.

10. Verfahren nach dem vorhergehenden Anspruch, **dadurch gekennzeichnet, dass**
ein katalytischer Brenner (6) Wärme erzeugt, die dem internen Reformer (2d) zugeführt wird.

11. Verfahren nach einem der vorhergehenden Ansprüche, **dadurch gekennzeichnet, dass**
dem katalytischen Brenner (6) Kohlendioxid und Wasserstoff, die bei der internen Reformierung gebildet werden, zugeführt werden.

12. Verfahren nach einem der vorhergehenden Ansprüche, **dadurch gekennzeichnet, dass**
als interner Reformer (2d) eine Katalysator-Struktur, insbesondere eine Schicht enthaltend Pt, Al, Rh, Ni oder Sn, verwendet wird.

13. Verfahren nach einem der vorhergehenden Ansprüche, **dadurch gekennzeichnet, dass**
eine Mitteltemperatur- Polymer-Elektrolyt - Brennstoffzelle verwendet wird.
